# EUROPEAN PATENT APPLICATION

(11) **EP 4 783 599 A1**
(43) Date of publication of application: **29.07.2026**
(21) Application number: 24878640.2
(22) Date of filing: 12.08.2024
(51) Int. Cl.: H04N 23/65

(54) **IMAGE SENSOR, AND METHOD AND APPARATUS FOR STARTING IMAGE ACQUISITION**

(30) Priority: 19.10.2023 CN 202311365994
(71) Applicant: HUAWEI TECHNOLOGIES CO., LTD., Shenzhen 518129 (CN)
(72) Inventor: ZHANG, Bin, Shenzhen, Guangdong 518129 (CN); XI, Yue, Shenzhen, Guangdong 518129 (CN); XIE, Chengzhi, Shenzhen, Guangdong 518129 (CN)
(74) Representative: Thun, Clemens
(86) International application number: PCT/CN2024/111327
(87) International publication number: WO 2025/081988

(57) **Abstract**

An image sensor and an image capture starting method and apparatus, applied to the field of image capture technologies, are provided, to reduce a false wakeup rate, thereby reducing power consumption and prolonging a service life of a battery. In this application, only when determining that a moving object exists in an image shooting range and the moving object is a target object, the image sensor wakes up a system on chip and starts capturing an image or a video. In comparison with a conventional solution in which the system on chip is woken up when it is detected that a moving object exists in the image shooting range, the solution in this application can effectively reduce the false wakeup rate, thereby reducing battery power consumption and prolonging the service life of the battery.

## Description

### CROSS-REFERENCE TO RELATED APPLICATIONS

This application claims priority to Chinese Patent Application No. 202311365994.2, filed with the China National Intellectual Property Administration on October 19, 2023 and entitled "IMAGE SENSOR, AND IMAGE CAPTURE STARTING METHOD AND APPARATUS", which is incorporated herein by reference in its entirety.

### TECHNICAL FIELD

This application relates to the field of image capture technologies, and in particular, to an image sensor and an image capture starting method and apparatus.

### BACKGROUND

With update and iteration of image sensor technologies, battery-powered IP cameras (IP cameras, IPCs) are increasingly widely used in the security protection field, the vehicle-mounted field, and the industrial application field. Battery lives and low-power-consumption precise identification are among core technologies of the battery-powered IPCs. In a related technology, a solution with the combination of a motion detector (MD) and a system on chip (system on chip, SoC) is proposed as a low-power-consumption standby solution. In this solution, the MD detects whether a moving object exists in an image shooting range. If the moving object exists in the image shooting range, the MD wakes up a pixel array of an image sensor to capture an image, and wakes up the SoC to perform target identification on the image captured by the pixel array, to determine whether a target exists in the image shooting range. If the target exists, the SoC indicates the image sensor to start recording. On the contrary, if no target exists, the SoC indicates the image sensor to enter a sleep state again. Some non-target moving objects such as falling leaves and animals may exist in the image shooting range, and movement of these objects may also be detected by the MD. As a result, the MD mistakenly wakes up the image sensor and the SoC. A high false wakeup rate causes repeated startups of an entire system, resulting in increased overall power consumption and decreased service life of a battery.

### SUMMARY

This application provides an image sensor and an image capture starting method and apparatus, to reduce a false wakeup rate, thereby reducing power consumption and prolonging a service life of a battery.

According to a first aspect, an embodiment of this application provides an image sensor. The image sensor is connected to a system on chip, and the image sensor includes a pixel array unit and a first control unit. The pixel array unit is configured to: receive an optical signal and output a to-be-detected image. The first control unit is configured to: when detecting that a moving object exists in the to-be-detected image and identifying that the moving object is a target object, send a start signal and description information of the target object to the system on chip, where the description information is obtained by performing target identification on the to-be-detected image.

Based on the foregoing solution, only when determining that a moving object exists in an image shooting range and the moving object is the target object, the image sensor wakes up the system on chip and starts capturing an image or a video. In comparison with a conventional solution in which the system on chip is woken up when it is detected that a moving object exists in the image shooting range, the solution in this application can effectively reduce a false wakeup rate, thereby reducing battery power consumption and prolonging a service life of a battery.

In a possible implementation, the image sensor further includes a second control unit. The first control unit is further configured to: when detecting that a moving object exists in the to-be-detected image and identifying that the moving object is the target object, send the start signal to the second control unit. The second control unit is configured to send, to the system on chip after receiving the start signal, a plurality of frames of images output by the pixel array unit.

Based on the foregoing solution, before the system on chip is started, the second control unit does not output the image to the system on chip. This may further reduce resource usage, reduce energy consumption, and prolong the service life of the battery.

In a possible implementation, the second control unit adjusts brightness and/or color of a first image before sending, to the system on chip, the plurality of frames of images output by the pixel array unit, and the first image is a first frame of image in the plurality of frames of images.

Based on the foregoing solution, before outputting the image and after performing motion detection, the image sensor adjusts brightness and color of the output image. This avoids processing by the system on chip on an image that is mistakenly detected, thereby further reducing energy consumption.

In a possible implementation, the second control unit is further configured to: receive a sleep signal from the system on chip, and enter a sleep state based on the sleep signal.

Based on the foregoing solution, the second control unit enters the sleep state in time when there is no moving target object, so that energy consumption can be further reduced.

In a possible implementation, the image sensor further includes an image signal processor ISP, and the first control unit includes a motion detection unit and a target identification unit. The motion detection unit is configured to: when detecting that a moving object exists in the to-be-detected image, send the to-be-detected image to the image signal processor. The ISP is configured to: perform enhancement processing on the to-be-detected image and send the processed to-be-detected image to the target identification unit. The target identification unit is configured to: when identifying that the moving object is the target object, send the start signal and the description information of the target object to the system on chip.

Based on the foregoing solution, the ISP is added before target identification, to improve definition of the image input to the target identification unit, thereby improving target identification accuracy.

In a possible implementation, the description information includes position information of the target object, a moving direction of the target object, and a distance between the target object and the image sensor.

In a possible implementation, before sending the start signal and the description information of the target object to the system on chip, the first control unit determines that the moving direction of the target object is a preset direction.

In a possible implementation, before sending the start signal and the description information of the target object to the system on chip, the first control unit determines a distance from the target object based on a size of the target object included in the to-be-detected image, and determines that the distance is less than a distance threshold.

According to a second aspect, an embodiment of this application provides an image capture apparatus, including the image sensor according to any one of the first aspect or the implementations of the first aspect and a system on chip connected to the image sensor.

According to a third aspect, an embodiment of this application provides an image capture starting method, applied to an image sensor. The image sensor is connected to a system on chip. The method includes: receiving an optical signal to obtain a to-be-detected image; and when detecting that a moving object exists in the to-be-detected image and identifying that the moving object is a target object, sending a start signal and description information of the target object to the system on chip, where the description information is obtained by performing target identification on the to-be-detected image.

In a possible implementation, the method further includes:
when detecting that a moving object exists in the to-be-detected image and identifying that the moving object is the target object, sending a plurality of frames of to-be-detected images to the system on chip.

In a possible implementation, the method further includes:
adjusting brightness and/or color of a first image before sending the plurality of frames of to-be-detected images to the system on chip, where the first image is a first frame of image in the plurality of frames of images.

In a possible implementation, the description information includes position information of the target object, a moving direction of the target object, and a distance between the target object and the image sensor.

In a possible implementation, the method further includes:
before sending the start signal and the description information of the target object to the system on chip, determining that the moving direction of the target object is a preset direction.

In a possible implementation, the method further includes:
before sending the start signal and the description information of the target object to the system on chip, determining a distance from the target object based on a size of the target object included in the to-be-detected image, and determining that the distance is less than a distance threshold.

For technical effects that can be achieved in the second aspect and the third aspect, refer to the descriptions of the technical effects that may be achieved in any possible design in the first aspect. Details are not described herein again.

### BRIEF DESCRIPTION OF DRAWINGS

FIG. 1 is a diagram of an architecture of a battery-powered IPC;
FIG. 2 is a diagram of a system architecture for implementing Solution 1;
FIG. 3 is a diagram of a detection wakeup procedure described in Solution 1;
FIG. 4 is a diagram of a system architecture for implementing Solution 2;
FIG. 5 is a diagram of a detection wakeup procedure described in Solution 2;
FIG. 6 is a diagram of an architecture of a system according to an embodiment of this application;
FIG. 7 is a schematic flowchart of an image capture starting method according to an embodiment of this application;
FIG. 8 is a diagram of an architecture of another system according to an embodiment of this application;
FIG. 9 is a schematic flowchart of another image capture starting method according to an embodiment of this application;
FIG. 10 is a schematic flowchart of another image capture starting method according to an embodiment of this application;
FIG. 11 is a schematic flowchart of another image capture starting method according to an embodiment of this application;
FIG. 12 is a diagram of a structure of an image sensor according to an embodiment of this application;
FIG. 13 is a diagram of a structure of another image sensor according to an embodiment of this application;
FIG. 14 is a schematic flowchart of a sleep state entering method according to an embodiment of this application;
FIG. 15 is a diagram of an architecture of a system according to an embodiment of this application;
FIG. 16 is a schematic flowchart of an image capture starting method according to an embodiment of this application; and
FIG. 17 is a flowchart of an image capture starting method according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

An image sensor is a device that can implement an optical-to-electrical conversion function, and is widely applied to an image shooting device, for example, may be applied to image shooting devices such as a camera, a camera lens, and a security protection monitor. The image sensor provided in embodiments of this application may be applied to various camera modules, for example, may be applied to image shooting devices such as a camera, a camera lens, and a security protection monitor. The image sensor may be a CCD image sensor including a charge-coupled device (charge-coupled device, CCD), or a CMOS image sensor including a complementary metal-oxide-semiconductor (complementary metal-oxide-semiconductor, CMOS). When light irradiated on an object enters the image sensor, the incident light into pixel units in the image sensor may be converted into corresponding electrical signals. A processor (or may be referred to as a controller, a processing unit, or the like) in the image sensor may generate an image of the object or determine a change of the object by using the electrical signals provided by the pixel units.

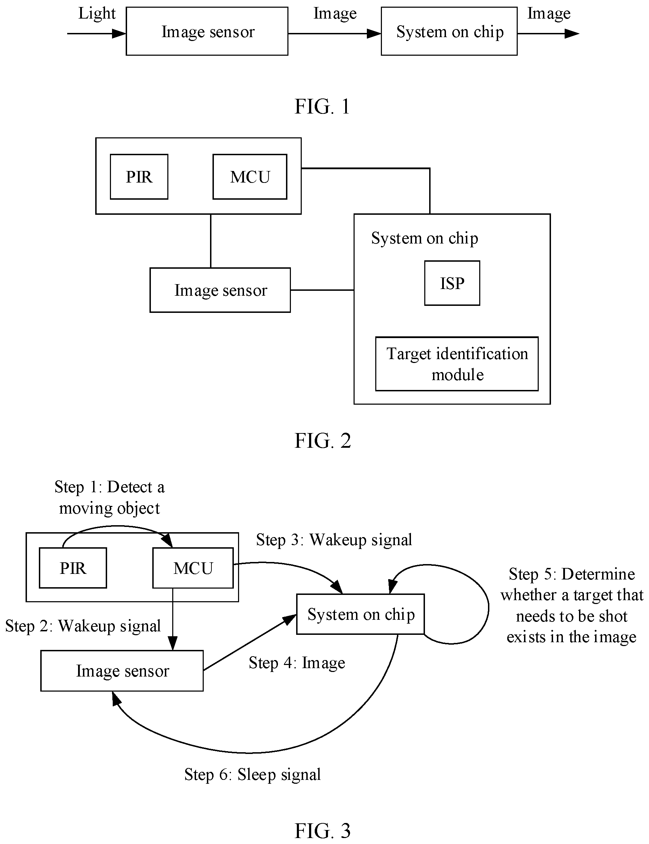

With the development of image sensors, their application fields have been gradually expanding. Battery-powered IP cameras (IP cameras, IPCs) are increasingly widely used in the security protection field, the vehicle-mounted field, the industrial application field, and the consumer field. For example, FIG. 1 is a diagram of an architecture of a battery-powered IPC, including an image sensor and a system on chip. The image sensor is configured to: capture an image and send the captured image to the system on chip, and the system on chip performs processing such as target identification and video stream distribution. To prolong a battery life, the image sensor and system on chip of the IPC are in a low-power-consumption mode when no target that needs to be shot exists in an image shooting range of a camera. When it is identified that a target exists in an image shooting range and the target moves, a low-power-consumption mode is exited and normal recording is started. Therefore, how to accurately identify a moving target by the image sensor in the low-power-consumption mode is one of core technologies of a battery-powered IPC product. Currently, there are mainly two solutions for accurately identifying the moving object in the low-power-consumption mode: adding a passive infrared (passive infrared, PIR) detector and a microcontroller unit (microcontroller unit, MCU) to detect the moving object; and adding a motion detection (MD) module to the image sensor to detect the moving object. The following describes the two solutions in detail.

### Solution 1: PIR+MCU for motion detection.

For example, FIG. 2 is a diagram of a system architecture for implementing Solution 1. The system architecture includes an image sensor, a system on chip, a PIR, and an MCU. The system on chip includes an image signal processor (image signal processor, ISP) and a target identification module (or may be referred to as an artificial intelligence (artificial intelligence, AI) detection module). When no moving object exists in an image shooting range, the image sensor and the system on chip are in a sleep state. When determining that the PIR detects that a moving object exists in an image shooting range, the MCU wakes up the system on chip and the image sensor to work, to identify whether the detected moving object is a target that needs to be shot. If the detected moving object is the target that needs to be shot, recording is started and a video stream is transmitted; or if the detected moving object is not the target that needs to be shot, a sleep state is entered again.

In an example, FIG. 3 shows a detection wakeup procedure described in Solution 1, which specifically includes the following steps. Step 1: The PIR detects that a moving object exists in an image shooting range. Step 2: The MCU sends a wakeup signal to the image sensor. Optionally, the wakeup signal sent to the image sensor indicates the image sensor to start capturing an image and send the captured image to the system on chip. Step 3: The MCU sends a wakeup signal to the system on chip. For example, the wakeup signal sent to the system on chip indicates the system on chip to enable the image processor and the target identification module to perform corresponding identification processing on the image from the image sensor. Step 4: The image sensor sends the captured image to the system on chip. Step 5: The system on chip performs target identification on the received image, and determines whether a target that needs to be shot exists in the image. It should be noted that features such as a type and a quantity of targets are not limited in this application. If the system on chip identifies that the image includes the target, the image from the image sensor is transmitted to a corresponding client through a network. For example, transmission may be performed through a wired network, or may be performed through a wireless network, for example, through wireless fidelity (wireless fidelity, Wi-Fi). On the contrary, if the system on chip identifies that the image does not include the target, step 6 continues to be performed. Step 6: The system on chip sends a sleep signal to the image sensor.

In Solution 1, although the image sensor and the system on chip may be enabled when the target appears in the image shooting range, because the PIR and the MCU are added, overall costs of the solution are high. In addition, in a non-target movement scenario, for example, a light change, a temperature change, or a falling leaf, the MCU also wakes up the system on chip and the image sensor, and a false wakeup rate is high.

### Solution 2: MD module for motion detection.

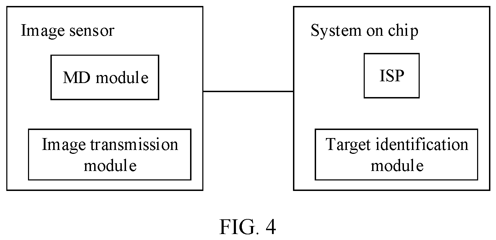

For example, FIG. 4 is a diagram of a system architecture for implementing Solution 2. The system architecture includes an image sensor and a system on chip. The image sensor includes an MD module and an image transmission module. The system on chip includes an ISP and a target identification module. When detecting a moving object, the MD wakes up the image transmission module of the image sensor to transmit a captured image to the system on chip, and wakes up the system on chip to perform target identification on the received image. If it is identified that a target exists in the image, recording is started and a video stream is transmitted; or if it is identified that no target exists in the image, a sleep state is entered again.

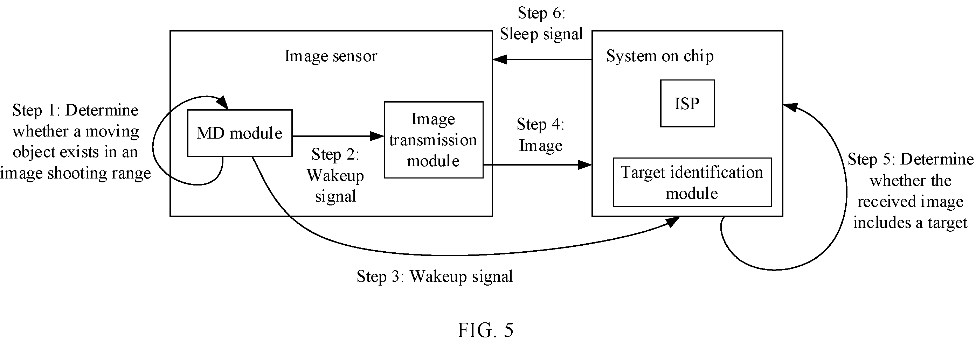

As an example, FIG. 5 shows a detection wakeup procedure described in Solution 2, which specifically includes the following steps: Step 1: The MD module determines, based on an image captured by a pixel unit of the image sensor, whether a moving object exists in an image shooting range. For example, the MD module may determine whether the moving object exists by comparing whether two images that are consecutively captured are the same. If the moving object exists, step 2 continues to be performed. If the moving object does not exist, the MD module repeatedly performs the step of determining, based on an image, whether a moving object exists in the image shooting range. Step 2: The MD module sends a wakeup signal to the image transmission module. For example, the wakeup signal sent to the image transmission module indicates the image transmission module to send, to the system on chip, the image captured by the pixel unit of the image sensor. Step 3: The MD module sends a wakeup signal to the system on chip. Step 4: The image transmission module sends the captured image to the system on chip. Step 5: The system on chip determines whether the received image includes a target. If the received image does not include the target, step 6 continues to be performed. If the received image includes the target, the system on chip transmits the image from the image sensor to a corresponding client through a network. Step 6: The system on chip sends a sleep signal to the image sensor.

It can be learned that, in Solution 2, as long as the moving object exists in the image shooting range, the MD module wakes up the image sensor to transmit the image to the system on chip. However, the moving object may be a non-target object, for example, a falling leaf or an animal. In this case, waking up the image sensor and the system on chip is false wakeup. Therefore, a false wakeup rate in Solution 2 is high.

In view of disadvantages of the foregoing solutions, this application provides an image sensor and an image capture solution. The image sensor is used to determine whether a captured image includes a moving object, and determine whether the moving object is a target object. If the captured image includes the moving object that is the target object, a system on chip is woken up. Compared with Solution 1 and Solution 2, in the solution of this application, the system on chip is woken up only when it is determined that the moving object in the image shooting range is the target object, so that a false wakeup rate can be effectively reduced.

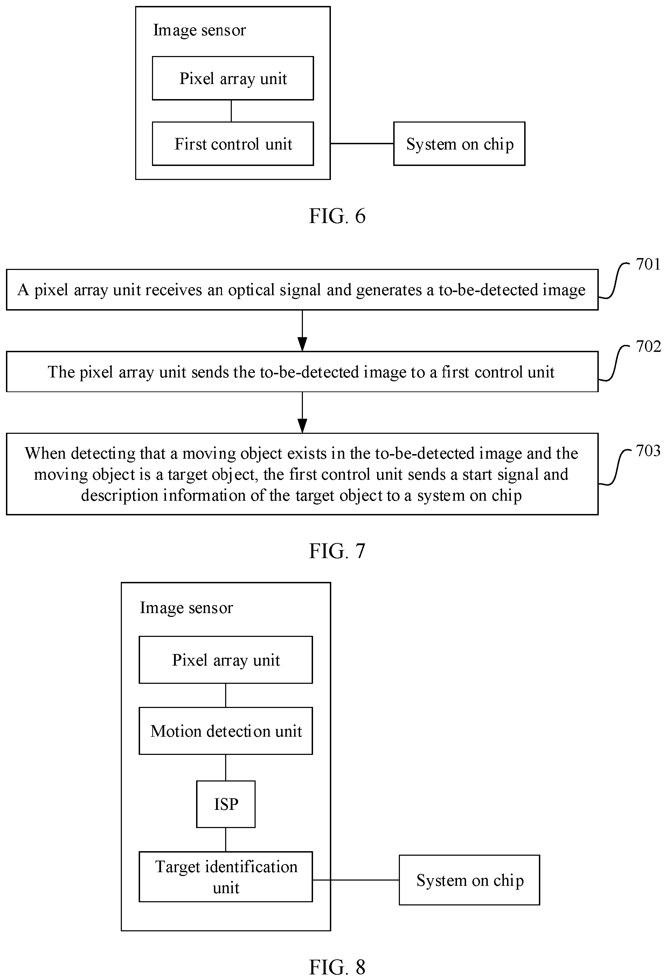

FIG. 6 is a diagram of an architecture of a system (or an image capture apparatus) according to an embodiment of this application. The system includes an image sensor and a system on chip. The image sensor includes a pixel array unit and a first control unit. The pixel array unit includes a plurality of pixel units, configured to: receive an optical signal and output a to-be-detected image. The first control unit is configured to: determine whether the to-be-detected image includes a moving object, determine whether the moving object is a target object, and wake up the system on chip when determining that the moving target object exists. The following describes the solution of this application with reference to the architecture of the system shown in FIG. 6. For example, FIG. 7 is a schematic flowchart of an image capture starting method according to an embodiment of this application. The method specifically includes the following steps.

701: The pixel array unit receives an optical signal and generates a to-be-detected image.

For example, the plurality of pixel units included in the pixel array unit receive optical signals emitted from the outside, convert the optical signals into corresponding electrical signals, and generate the to-be-detected image based on the electrical signals.

702: The pixel array unit sends the to-be-detected image to the first control unit.

703: When detecting that a moving object exists in the to-be-detected image and the moving object is a target object, the first control unit sends a start signal and description information of the target object to the system on chip.

The description information is obtained by performing target identification on the to-be-detected image. The description information may include information for describing a contour, position coordinates, a distance from the image sensor, a moving direction, and the like of the target. For example, the start signal indicates the system on chip to start receiving the image from the image sensor and start forwarding the received image to a client.

Based on the foregoing solution, only when determining that a moving object exists in an image shooting range and the moving object is the target object, the image sensor wakes up the system on chip and starts capturing an image or a video. In comparison with a conventional solution in which the system on chip is woken up when it is detected that a moving object exists in the image shooting range, the solution in this application can effectively reduce a false wakeup rate, thereby reducing battery power consumption and prolonging a service life of a battery.

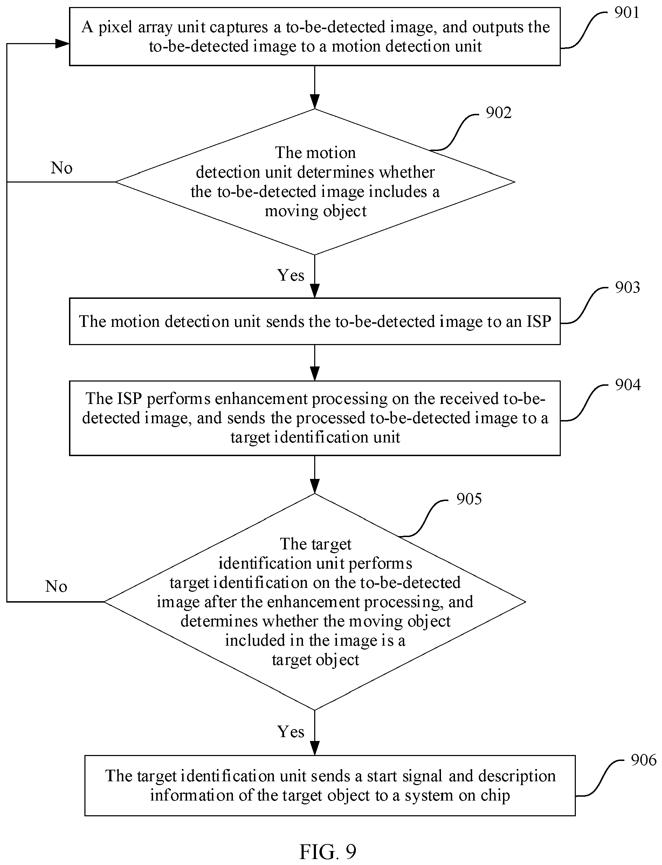

In an optional manner, the first control unit may include a motion detection unit and a target identification unit, which are respectively configured to detect a moving object and detect whether the moving object is the target object. The image sensor may further include an image signal processor ISP, configured to perform enhancement processing on the image captured by the pixel array unit. For example, FIG. 8 is a diagram of an architecture of another system according to an embodiment of this application. An image sensor in the system shown in FIG. 8 includes a pixel array unit, a motion detection unit, an ISP unit, and a target identification unit. The following further describes the solution of this application based on the architecture of the system shown in FIG. 8. For example, FIG. 9 is a schematic flowchart of another image capture starting method according to an embodiment of this application. The method specifically includes the following steps.

901: The pixel array unit captures a to-be-detected image, and outputs the to-be-detected image to the motion detection unit.

902: The motion detection unit determines whether the to-be-detected image includes a moving object.

If the to-be-detected image includes the moving object, continue to perform step 903.

If the to-be-detected image does not include the moving object, return to perform step 901.

903: The motion detection unit sends the to-be-detected image to the ISP.

904: The ISP performs enhancement processing on the received to-be-detected image, and sends the processed to-be-detected image to the target identification unit.

905: The target identification unit performs target identification on the to-be-detected image after the enhancement processing, and determines whether the moving object included in the image is a target object.

If the moving object included in the image is the target object, continue to perform step 906.

If the moving object included in the image is not the target object, return to perform step 901.

906: The target identification unit sends a start signal and description information of the target object to a system on chip.

Based on the foregoing solution, the ISP is added before target identification, to improve definition of the image input to the target identification unit, thereby improving target identification accuracy.

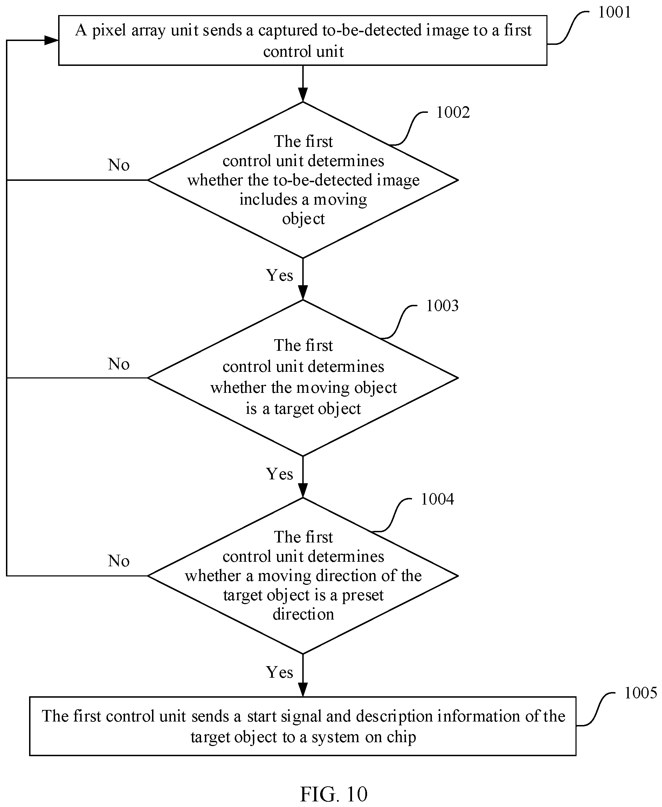

In some scenarios, before sending the start signal to the system on chip, a first control unit may further determine that a moving direction of the target object is a preset direction. For example, the first control unit may determine the moving direction of the target object based on several consecutive frames of images that are captured by the pixel array unit and that include the target object, and send the start signal to the system on chip when determining that the moving direction is the preset direction. For example, in some scenarios, the image sensor is disposed at a campus entrance, and is configured to detect a person entering the campus. In this case, when detecting that a moving object is a person, the first control unit may further determine whether a moving direction of the moving object is a direction of entering the campus. If the moving direction of the moving object is the direction of entering the campus, the first control unit sends a start signal to the system on chip; or if the moving direction of the moving object is not the direction of entering the campus, the first control unit does not start the system on chip. The following describes the scenario with reference to a specific embodiment. FIG. 10 is a schematic flowchart of another image capture starting method according to an embodiment of this application. The method specifically includes the following steps.

1001: A pixel array unit sends a captured to-be-detected image to a first control unit.

1002: The first control unit determines whether the to-be-detected image includes a moving object.

If the to-be-detected image includes the moving object, continue to perform step 1003.

If the to-be-detected image does not include the moving object, return to perform step 1001.

1003: The first control unit determines whether the moving object is a target object.

If the moving object is the target object, continue to perform step 1004.

If the moving object is not the target object, return to perform step 1001.

1004: The first control unit determines whether a moving direction of the target object is a preset direction.

If the moving direction of the target object is the preset direction, continue to perform step 1005.

If the moving direction of the target object is not the preset direction, return to perform step 1001.

1005: The first control unit sends a start signal and description information of the target object to a system on chip.

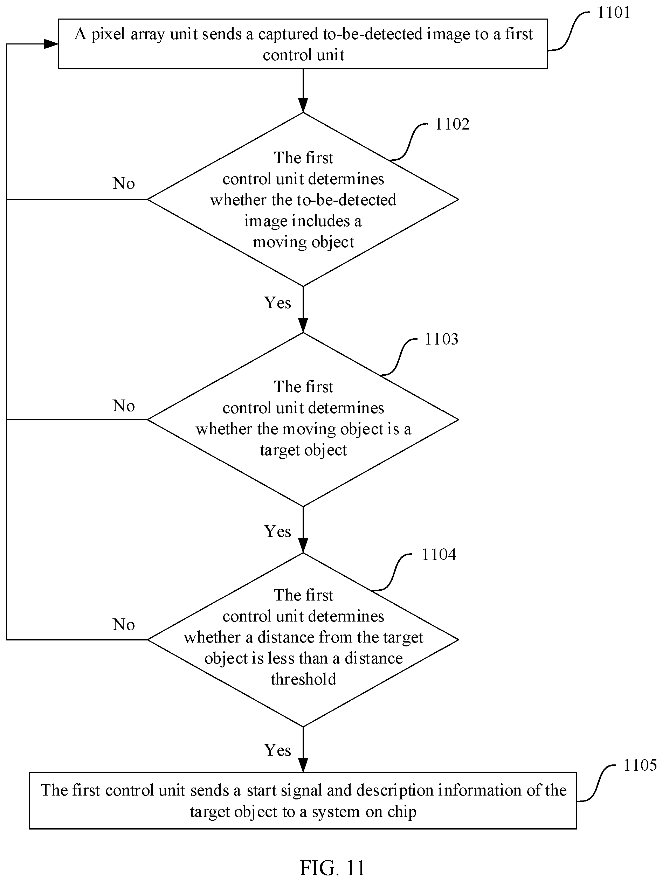

In some scenarios, before waking up the system on chip, the first control unit may further determine whether a distance from the target object is less than a distance threshold, and send the start signal to the system on chip when the distance is less than the distance threshold. The following further describes a solution in this scenario. For example, FIG. 11 is a schematic flowchart of another image capture starting method according to an embodiment of this application. The method specifically includes the following steps.

1101: A pixel array unit sends a captured to-be-detected image to a first control unit.

1102: The first control unit determines whether the to-be-detected image includes a moving object.

If the to-be-detected image includes the moving object, continue to perform step 1103.

If the to-be-detected image does not include the moving object, return to perform step 1101.

1103: The first control unit determines whether the moving object is a target object.

If the moving object is the target object, continue to perform step 1104.

If the moving object is not the target object, return to perform step 1101.

1104: The first control unit determines whether a distance from the target object is less than a distance threshold.

If the distance from the target object is less than the distance threshold, continue to perform step 1105.

If the distance from the target object is not less than the distance threshold, return to perform step 1101.

1105: The first control unit sends a start signal and description information of the target object to a system on chip.

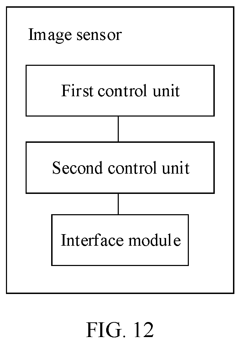

In some embodiments, the image sensor may further include a second control unit. When detecting that a moving object exists in the image and the moving object is the target object, the first control unit sends a start signal to the second control unit. After receiving the start signal, a second pixel unit may send, to the system on chip, a plurality of frames of images captured by the pixel array. Further, the system on chip may process the received plurality of frames of images and then transmit the processed plurality of frames of images to a client. For example, the image sensor may further include an interface module, used by the second control unit to send the plurality of frames of images to the system on chip. As an example, for an architecture of an image sensor including the second control unit, refer to 12. For a function of a first control unit shown in FIG. 12, refer to related descriptions in the foregoing embodiments. Details are not described herein again.

In a possible implementation, a pixel array unit in the image sensor may include a plurality of pixel units. The first control unit is configured to control a part of the pixel units to output pixel values, to obtain a to-be-detected image. For ease of description, the part that is of the pixel units and that is controlled by the first control unit is briefly referred to as a first pixel array below. The second control unit may control all the pixel units in the pixel array unit to output pixel values, to obtain a plurality of frames of images output to the system on chip. For example, the pixel units included in the first pixel array may be obtained by extracting pixel units at equal spacings from the pixel array unit, and a super range of the first pixel array is the same as that of the pixel array unit. For example, a distance between any two adjacent pixel units in the first pixel array unit is a specified distance, and the specified distance may be an integer multiple of a length of any pixel unit in the pixel array unit.

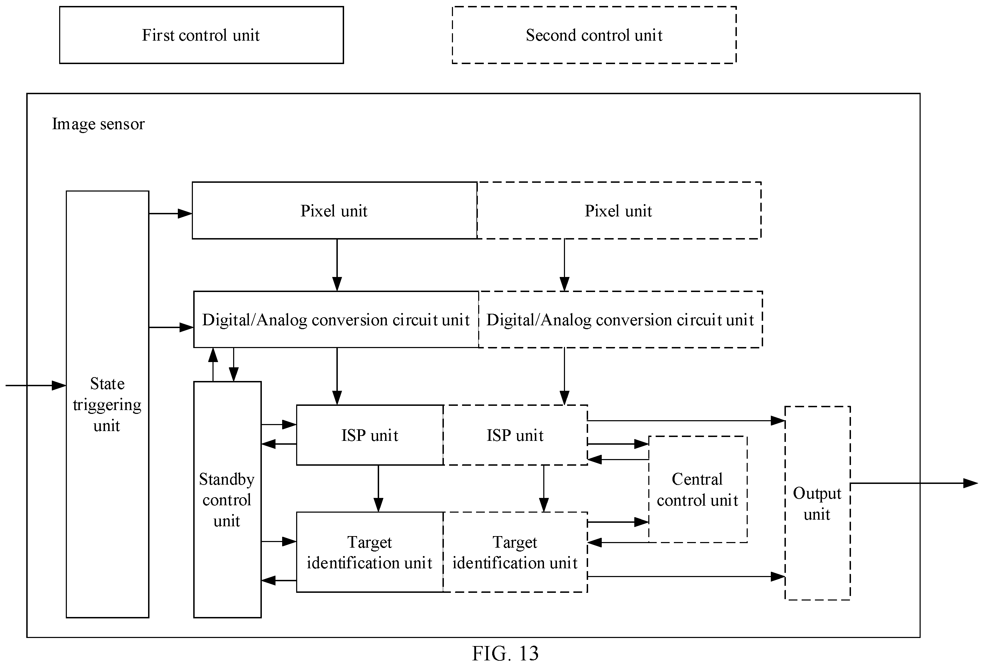

In an example, the first control unit may be further considered as an always-on power domain running in a low-power-consumption mode, and the second control unit may be considered as a switchable power domain running in a normal working mode. Optionally, an oscillator (oscillator, OSC) configured to provide clock information may be further disposed in the always-on power domain. For example, for an architecture of an image sensor, refer to FIG. 13. As shown in FIG. 13, both a first control unit and a second control unit may include a pixel unit configured to capture an image (a quantity of pixel units included in the first control unit and a quantity of pixel units included in the second control unit are different), a digital/analog conversion circuit unit configured to perform digital/analog signal conversion, an ISP unit, and a target identification unit. For example, the first control unit may further include a standby control unit, configured to wake up a system on chip based on an output result of the target identification module. The first control unit may further include a state triggering unit, configured to receive an external signal for entering a sleep state. For example, the second control unit may further include a central control unit and an output unit. The central control unit is configured to determine whether a plurality of frames of images need to be output to the system on chip, and the output unit is configured to send the plurality of frames of images to the system on chip.

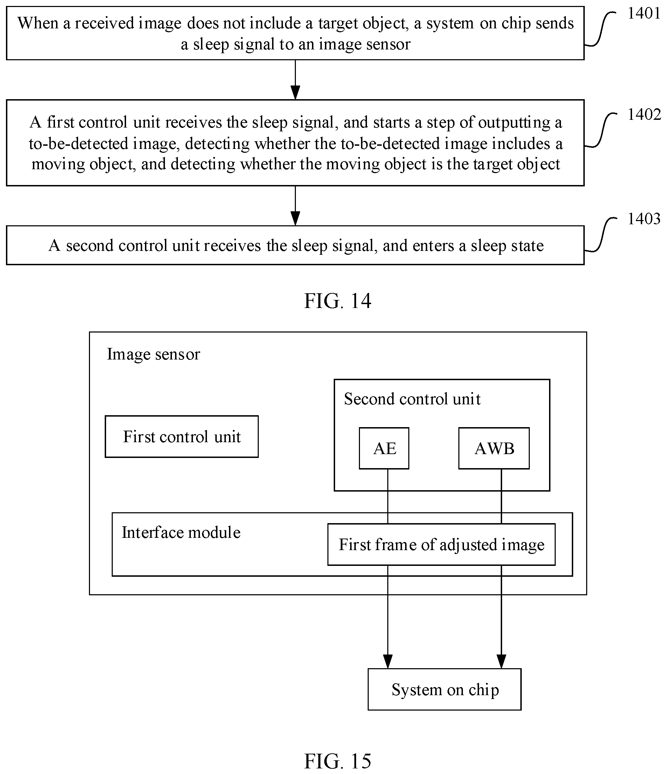

In an optional manner, after receiving the plurality of frames of images from the second control unit, the system on chip may determine whether the plurality of frames of images include a moving target object. When determining that a frame of image does not include the moving target object, the system on chip may send a sleep signal to the image sensor, to indicate the second control unit to sleep and indicate the first control unit to continue to start detection of a moving object and a target object. For example, FIG. 14 is a schematic flowchart of a sleep state entering method. The method specifically includes the following steps.

1401: When a received image does not include a target object, a system on chip sends a sleep signal to an image sensor.

For example, the system on chip may send the sleep signal to a state triggering unit included in the image sensor.

1402: A first control unit receives the sleep signal, and starts a step of outputting a to-be-detected image, detecting whether the to-be-detected image includes a moving object, and detecting whether the moving object is the target object.

1403: A second control unit receives the sleep signal, and enters a sleep state.

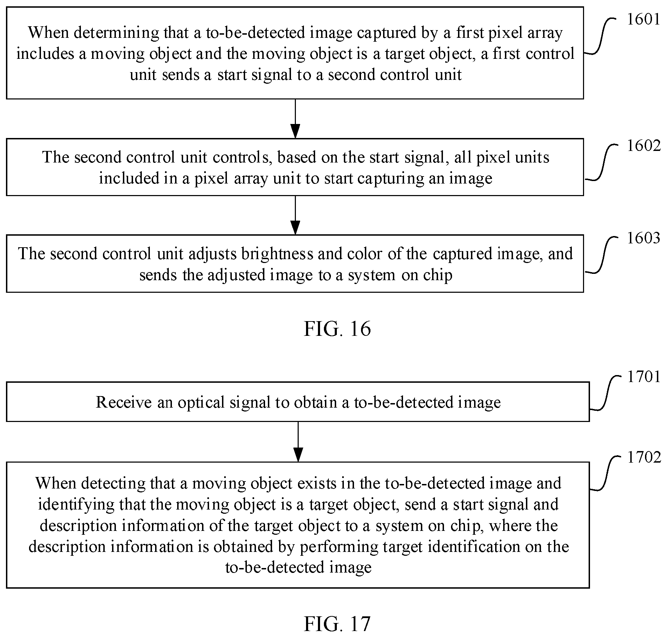

In a possible implementation, before transmitting a plurality of frames of images to the system on chip, the second control unit may further adjust brightness and/or color of a first frame of image in the plurality of frames of images. For example, an auto exposure (auto exposure, AE) module and an auto white balance (auto white balance, AWB) module may be disposed in the second control unit, and are configured to adjust the brightness and the color of the first frame of image in the plurality of frames of images before the plurality of frames of images are output to the system on chip. In an example, FIG. 15 is a diagram of an architecture of a system according to an embodiment of this application. A second control unit includes an AE module and an AWB module. After the AE module and the AWB module adjust a first frame of image, the first frame of adjusted image is output to a system on chip through an interface module. The following specifically describes the solution of this application with reference to the architecture of the system shown in FIG. 15 and the architecture of the image sensor shown in FIG. 13. For example, FIG. 16 is a schematic flowchart of an image capture starting method according to an embodiment of this application. The method specifically includes the following steps.

1601: When determining that a to-be-detected image captured by a first pixel array includes a moving object and the moving object is a target object, a first control unit sends a start signal to a second control unit.

1602: The second control unit controls, based on the start signal, all pixel units included in a pixel array unit to start capturing an image.

1603: The second control unit adjusts brightness and color of the captured image, and sends the adjusted image to a system on chip.

It should be noted that, a "connection" in embodiments of this application is an electrical connection, and a connection between two electrical elements may be a direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, and A and B are connected through C.

Refer to FIG. 17. This application further provides a flowchart of an image capture starting method. The method includes the following steps.

1701: Receive an optical signal to obtain a to-be-detected image.

1702: When detecting that a moving object exists in the to-be-detected image and identifying that the moving object is a target object, send a start signal and description information of the target object to a system on chip, where the description information is obtained by performing target identification on the to-be-detected image.

In a possible implementation, the method further includes:
when detecting that a moving object exists in the to-be-detected image and identifying that the moving object is the target object, sending a plurality of frames of to-be-detected images to the system on chip.

In a possible implementation, the method further includes:
adjusting brightness and/or color of a first image before sending the plurality of frames of to-be-detected images to the system on chip, where the first image is a first frame of image in the plurality of frames of images.

In a possible implementation, the description information includes position information of the target object, a moving direction of the target object, and a distance between the target object and an image sensor.

In a possible implementation, the method further includes:
before sending the start signal and the description information of the target object to the system on chip, determining that the moving direction of the target object is a preset direction.

In a possible implementation, the method further includes:
before sending the start signal and the description information of the target object to the system on chip, determining a distance from the target object based on a size of the target object included in the to-be-detected image, and determining that the distance is less than a distance threshold.

It is clear that a person skilled in the art can make various modifications and variations to this application without departing from the protection scope of this application. This application is intended to cover these modifications and variations of this application provided that they fall within the scope of protection defined by the claims of this application and their equivalent technologies.

## Claims

1. An image sensor, wherein the image sensor is connected to a system on chip, and the image sensor comprises a pixel array unit and a first control unit, wherein
the pixel array unit is configured to: receive an optical signal and output a to-be-detected image; and
the first control unit is configured to: when detecting that a moving object exists in the to-be-detected image and identifying that the moving object is a target object, send a start signal and description information of the target object to the system on chip, wherein the description information is obtained by performing target identification on the to-be-detected image.

2. The image sensor according to claim 1, wherein the image sensor further comprises a second control unit;
the first control unit is further configured to: when detecting that the moving object exists in the to-be-detected image and identifying that the moving object is the target object, send the start signal to the second control unit; and
the second control unit is configured to send, to the system on chip after receiving the start signal, a plurality of frames of images output by the pixel array unit.

3. The image sensor according to claim 2, wherein the second control unit adjusts brightness and/or color of a first image before sending, to the system on chip, the plurality of frames of images output by the pixel array unit, and the first image is a first frame of image in the plurality of frames of images.

4. The image sensor according to claim 2 or 3, wherein the second control unit is further configured to:
receive a sleep signal from the system on chip, and enter a sleep state based on the sleep signal.

5. The image sensor according to any one of claims 1 to 4, wherein the image sensor further comprises an image signal processor ISP, and the first control unit comprises a motion detection unit and a target identification unit;
the motion detection unit is configured to: when detecting that the moving object exists in the to-be-detected image, send the to-be-detected image to the image signal processor;
the ISP is configured to: perform enhancement processing on the to-be-detected image and send the processed to-be-detected image to the target identification unit; and
the target identification unit is configured to: when identifying that the moving object is the target object, send the start signal and the description information of the target object to the system on chip.

6. The image sensor according to any one of claims 1 to 5, wherein the description information comprises position information of the target object, a moving direction of the target object, and a distance between the target object and the image sensor.

7. The image sensor according to any one of claims 1 to 6, wherein before sending the start signal and the description information of the target object to the system on chip, the first control unit determines that the moving direction of the target object is a preset direction.

8. The image sensor according to any one of claims 1 to 7, wherein before sending the start signal and the description information of the target object to the system on chip, the first control unit determines a distance from the target object based on a size of the target object comprised in the to-be-detected image, and determines that the distance is less than a distance threshold.

9. An image capture apparatus, comprising the image sensor according to any one of claims 1 to 8 and a system on chip connected to the image sensor.

10. An image capture starting method, applied to an image sensor, wherein the image sensor is connected to a system on chip, and the method comprises:
receiving an optical signal to obtain a to-be-detected image; and
when detecting that a moving object exists in the to-be-detected image and identifying that the moving object is a target object, sending a start signal and description information of the target object to the system on chip, wherein the description information is obtained by performing target identification on the to-be-detected image.

11. The method according to claim 10, wherein the method further comprises:
when detecting that the moving object exists in the to-be-detected image and identifying that the moving object is the target object, sending a plurality of frames of to-be-detected images to the system on chip.

12. The method according to claim 11, wherein the method further comprises:
adjusting brightness and/or color of a first image before sending the plurality of frames of to-be-detected images to the system on chip, wherein the first image is a first frame of image in the plurality of frames of images.

13. The method according to any one of claims 10 to 12, wherein the description information comprises position information of the target object, a moving direction of the target object, and a distance between the target object and the image sensor.

14. The method according to any one of claims 10 to 12, wherein the method further comprises:
before sending the start signal and the description information of the target object to the system on chip, determining that a moving direction of the target object is a preset direction.

15. The method according to any one of claims 10 to 14, wherein the method further comprises:
before sending the start signal and the description information of the target object to the system on chip, determining a distance from the target object based on a size of the target object comprised in the to-be-detected image, and determining that the distance is less than a distance threshold.
